# EUROPÄISCHE PATENTSCHRIFT

(11) **EP 0 847 493 B1**
(45) Veröffentlichungstag und Bekanntmachung des Hinweises auf die Patenterteilung: **27.03.2002**
(21) Anmeldenummer: 96946115.1
(22) Anmeldetag: 20.12.1996
(51) Int. Cl.: F02M 35/10

(54) **LUFTFÜHRUNGSANLAGE**
AIR CONDUCTION SYSTEM
SYSTEME D'ACHEMINEMENT D'AIR

(30) Priorität: 29.06.1996 DE 19626251
(43) Veröffentlichungstag der Anmeldung: 17.06.1998
(73) Patentinhaber: ROBERT BOSCH GMBH, 70442 Stuttgart (DE)
(72) Erfinder: ROPERTZ, Peter, D-71706 Markgröningen (DE)
(86) Internationale Anmeldenummer: DE9602497
(87) Internationale Veröffentlichungsnummer: WO9800638

(56) Entgegenhaltungen:
- DE-A- 3 437 102

## Beschreibung

### Stand der Technik

Die Erfindung geht aus von einer Luftführungsanlage nach der Gattung des Anspruchs 1.

Die Brennkraftmaschine ist insbesondere für ein Kraftfahrzeug vorgesehen. Bei bisher bekannter Luftführungsanlage sind die verschiedenen Komponenten der Luftführungsanlage an verschiedenen Stellen der Karosserie des Kraftfahrzeugs befestigt. So führt beispielsweise bei einer bekannten Luftführungsanlage ein Gasführungsraum von einer Lufteinlaßöffnung der Luftführungsanlage zu einem beispielsweise am Radkasten der Karosserie des Kraftfahrzeugs befestigten Luftfilter. Von dem Luftfilter führt der Gasführungsraum dann weiter beispielsweise zu einem Drosselorgan mit einer darin schwenkbar gelagerten Drosselklappe. Hinter dem Drosselorgan teilt sich der Gasführungsraum in mehrere zu Zylindern führende Kanäle. Die Anzahl der Kanäle entspricht der Anzahl der Zylinder der Brennkraftmaschine.

Nachteilig bei der bekannten Luftführungsanlage ist, daß diese in dem Motorraum des Kraftfahrzeugs insgesamt viel Platz benötigt und dadurch für weitere Aggregate des Kraftfahrzeugs in dem Motorraum weniger Platz zur Verfügung steht. Oder, weil für die Luftführungsanlage nur ein bestimmter Einbauraum zur Verfügung gestellt wird, kann die Luftführungsanlage bzw. das nutzbare innere Volumen des Gasführungsraums der Luftführungsanlage nicht so groß gebaut werden, wie es für das optimale Arbeiten der Luftführungsanlage erforderlich ist. Dadurch sind Kompromisse erforderlich, die nicht immer zu einem in jeder Hinsicht zufriedenstellenden Ergebnis führen. Zusätzlich erfordert die bekannte Luftführungsanlage einen hohen Aufwand zum Einbau in den Motorraum des Kraftfahrzeugs.

Die Offenlegungsschrift DE-A-34 37 102 zeigt eine Saugrohranlage für Mehrzylinder-Brennkraftmaschinen. Bei dieser Saugrohranlage mit einem Sammelsaugrohr, einem an dieses anschließenden Ansaugverteilers und nebeneinander angeordneten Einzelsaugrohren bilden die Einzelsaugrohre mit dem Sammelsaugrohr eine einstückige Einheit, die mindestens einen Flunch aufweist, von dem die Einzelsaugrohre ausgehen und sich in einem Bogen über mehr als 90° zu den Anschlussflanschen erstrecken. Das Sammelsaugrohr ist in dem von den Einzelsaugrohren umschlossenen Raum angeordnet. Ein bei Brennkraftmaschinen üblicher Luftfilter muß in einem zusätzlichen Arbeitsschritt an einer anderen Stelle innerhalb des Motorraums angebracht werden. Zusätzlich muß der Luftfilter mit der Saugrohranlage in geeigneter Weise verbunden werden, wobei diese Verbindung durch Schwingungen beansprucht ist. Wegen dem zusätzlichen Anbringen des Luftfilters entsteht ein erheblicher Mehraufwand und im Motorraum sind mehr Bauteile vorhanden, was von vielen Kunden als optisch störend empfunden wird.

### Vorteile der Erfindung

Die erfindungsgemäße Luftführungsanlage mit den kennzeichnenden Merkmalen des Anspruchs 1 hat demgegenüber den Vorteil, daß die Luftführungsanlage bei großem inneren nutzbaren Volumen insgesamt einen kleinen Einbauraum benötigt. Bei der Luftführungsanlage wird der zu Verfügung stehende Einbauraum vorteilhafterweise besonders gut ausgenutzt.

Der Anbau der Luftführungsanlage an die Brennkraftmaschine bzw. der Einbau der Luftführungsanlage in das Kraftfahrzeug ist zusätzlich vorteilhafterweise besonders einfach und erfordert wenig Montageaufwand.

Durch das Vorsehen des Luftfilters in der Luftführungsanlage erhält man den Vorteil, daß besonders wenig Bauteile in den Motorraum eingebaut werden müssen. Besonders vorteilhaft ist, dass sich ein optisch klares Bild innerhalb des Motorraums ergibt, weniger Bauteile und Verbindungsleitungen erforderlich sind, weniger Befestigungsstellen an der Karosserie des Kraftfahrzeugs vorgesehen werden müssen und die Dauerhaltbarkeit insgesamt betrachtet wesentlich verbessert wird.

Durch die in den Unteransprüchen aufgeführten Maßnahmen sind vorteilhafte Weiterbildungen und Verbesserungen der im Hauptanspruch angegebenen Luftführungsanlage möglich.

Wenn sich der schneckenförmig geformte Bogenbereich, in Richtung der durch die Luftführungsanlage strömenden Luft betrachtet, hinter dem durchgeführten Bereich befindet, dann kann der zur Verfügung stehende Einbauraum auf vorteilhafte Weise besonders gut ausgenutzt werden.

Befindet sich der scheckenförmig geformte Bogenbereich stromaufwärts vor der Auslaßöffnung der Luftführungsanlage, dann ergibt sich vorteilhafterweise eine besonders günstige Führung der Luft.

Wenn sich der durchgeführte Bereich relativ kurz hinter der Lufteinlaßöffnung befindet, dann ergibt sich eine weitere Verbesserung bei der Nutzung des zu Verfügung stehenden Einbauraums.

Der Bereich zwischen dem durchgeführten Bereich und dem schneckenförmig geformten Bogenbereich ist vorteilhafterweise besonders gut zum Vorsehen des Luftfilters geeignet.

In dem Bereich zwischen der Lufteinlaßöffnung und der Auslaßöffnung der Luftführungsanlage kann vorteilhafterweise ohne großen Aufwand ein Drosselorgan vorgesehen sein.

Hat die Brennkraftmaschine zwei oder mehr Zylinder und ist beispielsweise deshalb der Gasführungsraum im Bereich vor der Auslaßöffnung der Luftführungsanlage in zwei oder mehr Kanäle aufgeteilt und wird der durchgeführte Bereich zwischen den mindestens zwei Kanälen hindurchgeführt, so erhält man vorteilhafterweise eine besonders zweckmäßige Ausnutzung des zur Verfügung stehenden Einbauraums. Ungenutzte Bereiche in dem für die Luftführungsanlage zur Verfügung stehenden Einbauraum werden weitgehend vermieden.

Wird die Zylinderkopfhaube mindestens teilweise dazu benutzt, um mindestens einen Teilbereich des Gasführungsraums zu bilden, so werden vorteilhafterweise insgesamt wenig Bauteile benötigt und der zu Verfügung stehende Einbauraum kann besonders gut genutzt werden. Der Montageaufwand beim Einbau der Luftführungsanlage an die Brennkraftmaschine ist besonders gering.

Dient die Zylinderkopfhaube zum Halten bzw. Tragen des Luftfilters, so erhält man vorteilhafterweise eine weitere Verringerung des erforderlichen Montageaufwands, und die Anzahl der benötigten Bauteile ist vorteilhafterweise besonders gering.

Ist ein Designdeckel vorgesehen, der mindestens teilweise mindestens einen Teilbereich des Gasführungsraums bildet, so erhält man ein optisch ansprechendes Aussehen der Luftführungsanlage, zusätzlich werden insgesamt wenig Bauteile benötigt, und der zu Verfügung stehende Einbauraum wird besonders gut ausgenutzt.

### Zeichnung

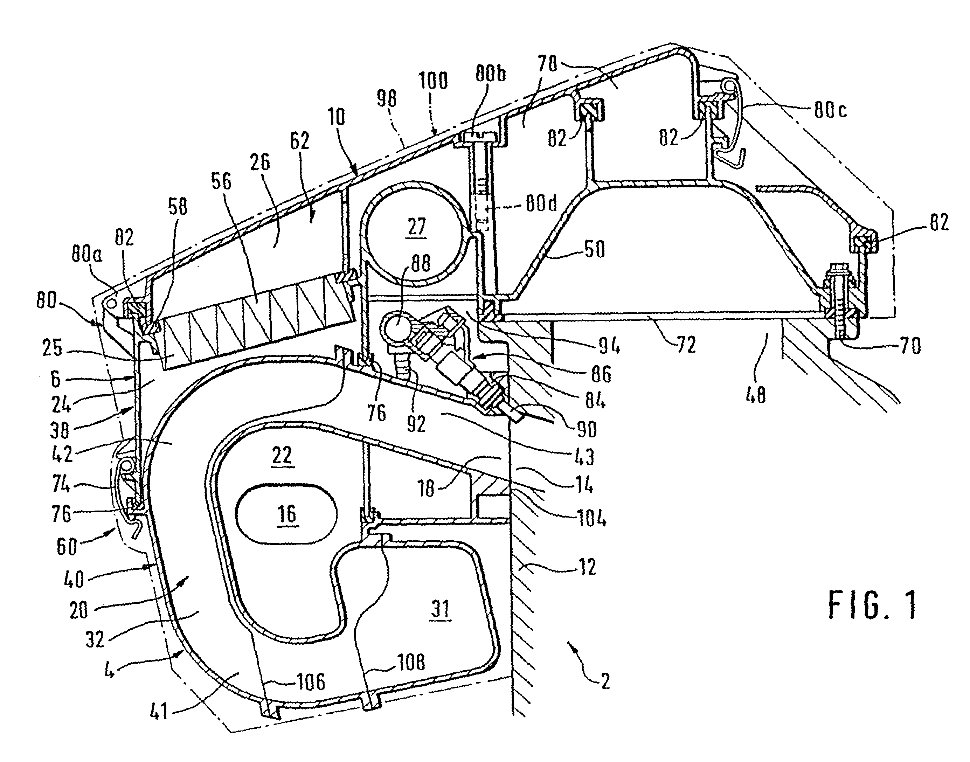

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figuren 1 bis 8 unterschiedliche Schnitte und Ansichten beispielhaft ausgewählter Luftführungsanlagen.

### Beschreibung der Ausführungsbeispiele

Die erfindungsgemäß ausgeführte Luftführungsanlage kann bei unterschiedlichen Brennkraftmaschinen vorgesehen sein. Bei der Brennkraftmaschine handelt es sich beispielsweise um einen Motor, dem Luft bzw. ein Kraftstoff-Luft-Gemisch über die Luftführungsanlage zugeführt wird. Die Luftführungsanlage kann zusammen mit verschiedenen, zum Betreiben der Brennkraftmaschine erforderlichen Komponenten zusammengebaut sein.

Die Brennkraftmaschine ist beispielsweise ein Saugmotor, bei dem durch entsprechende Bewegung der Kolben Luft angesaugt wird. Es ist aber auch möglich, zusätzlich ein Aggregat vorzusehen, das der Brennkraftmaschine die Luft unter Druck zuführt.

Die Brennkraftmaschine hat vorzugsweise mehrere Zylinder, es kann aber auch prinzipiell eine Brennkraftmaschine mit einem einzigen Zylinder sein.

Obwohl die Brennkraftmaschine unterschiedlicher Bauart sein kann und zum Antrieb unterschiedlicher Maschinen verwendbar ist, wird aus Vereinfachungsgründen bei der nachfolgenden Beschreibung der Ausführungsbeispiele angenommen, daß die Brennkraftmaschine nach dem Ottomotorprinzip arbeitet, ein Saugmotor ist, im Motorraum eines Kraftfahrzeugs eingebaut ist und zum Antreiben des Kraftfahrzeugs dient. Ferner wird angenommen, daß die Brennkraftmaschine vier in Reihe angeordnete Zylinder umfaßt, wobei die Reihe der vier Zylinder quer zur Fahrtrichtung des Kraftfahrzeugs eingebaut ist.

Die **Figur 1** zeigt einen Querschnitt durch die Luftführungsanlage. Die dargestellte Schnittebene verläuft längs zur Fahrtrichtung des Kraftfahrzeugs.

Die **Figur 2** zeigt einen Längsschnitt durch die Luftführungsanlage, wobei die in der Figur 2 dargestellte Schnittebene senkrecht zu der in der Figur 1 gezeigten Schnittebene bzw. quer zur Fahrtrichtung verläuft.

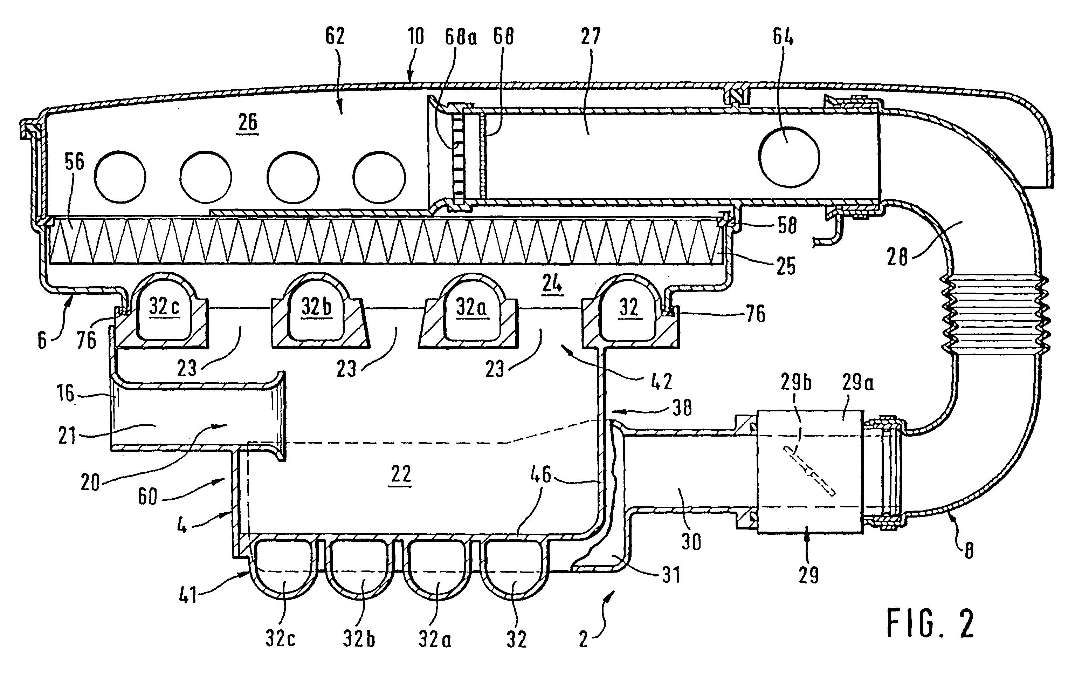

Zwecks besserer Übersichtlichkeit befinden sich die in den Figuren 1 und 2 gezeigten Schnittflächen jeweils nicht in einer Ebene, sondern verlaufen mehrfach abgestuft, so daß wesentliches der Erfindung möglichst deutlich erkennbar ist.

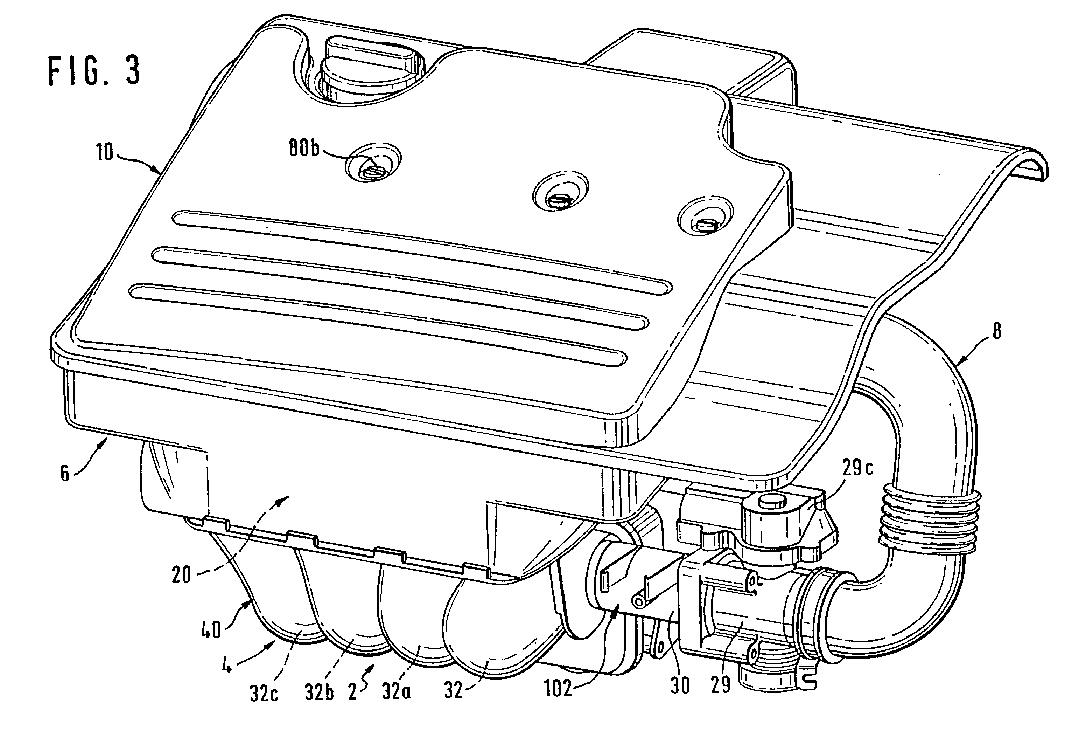

Die **Figur 3** zeigt einen Blick auf die Luftführungsanlage, wobei die Blickrichtung von schräg vorne, etwas oberhalb der Luftführungsanlage erfolgt.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte bei allen Ausführungsbeispielen. Sofern sich aus den Erläuterungen nichts anderes ergibt, sind die Einzelheiten der verschiedenen Ausführungsbeispiele miteinander kombinierbar.

Die für die Beschreibung und für die Zeichnung bevorzugt ausgewählte, beispielhaft ausgebildete Luftführungsanlage 2 ist im wesentlichen aus einem ersten Luftführungsteil 4, einem zweiten Luftführungsteil 6, einem Rohr 8 und einer Designhaube 10 zusammengesetzt. Grob betrachtet, sind das erste Luftführungsteil 4, das zweite Luftführungsteil 6, das Rohr 8 und die Designhaube 10 Hauptkomponenten der Luftführungsanlage 2.

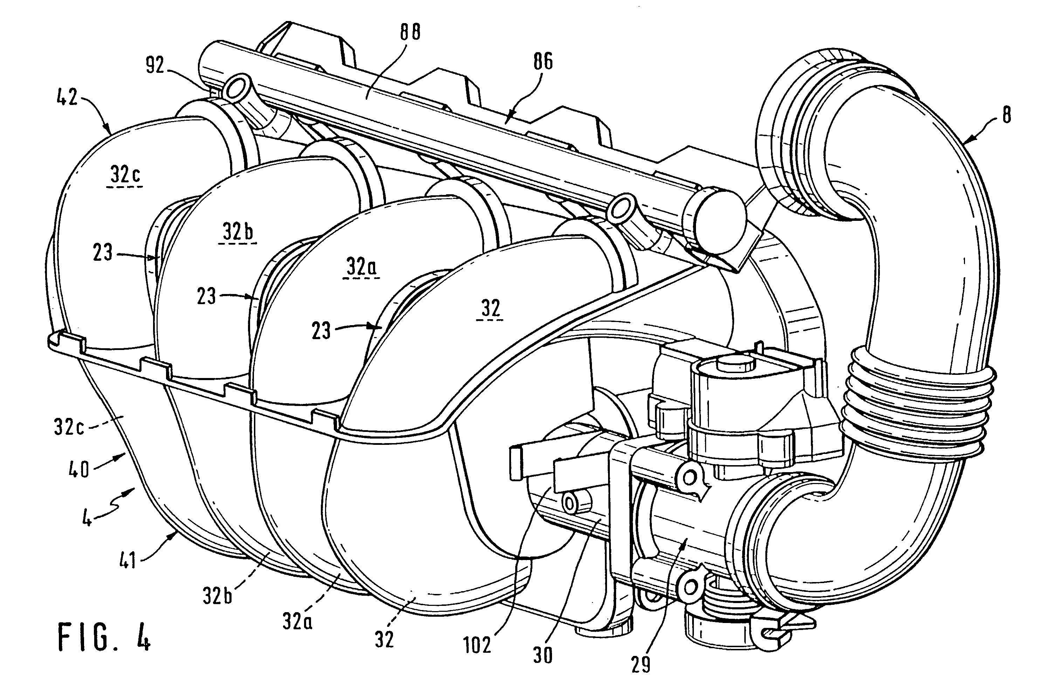

Die **Figur 4** zeigt einen Teil der Luftführungsanlage 2. Die Figur 4 zeigt im wesentlichen das erste Luftführungsteil 4 und das Rohr 8. Zwecks besserer Übersichtlichkeit sind in der Figur 4 das zweite Luftführungsteil 6 und die Designhaube 10 nicht dargestellt.

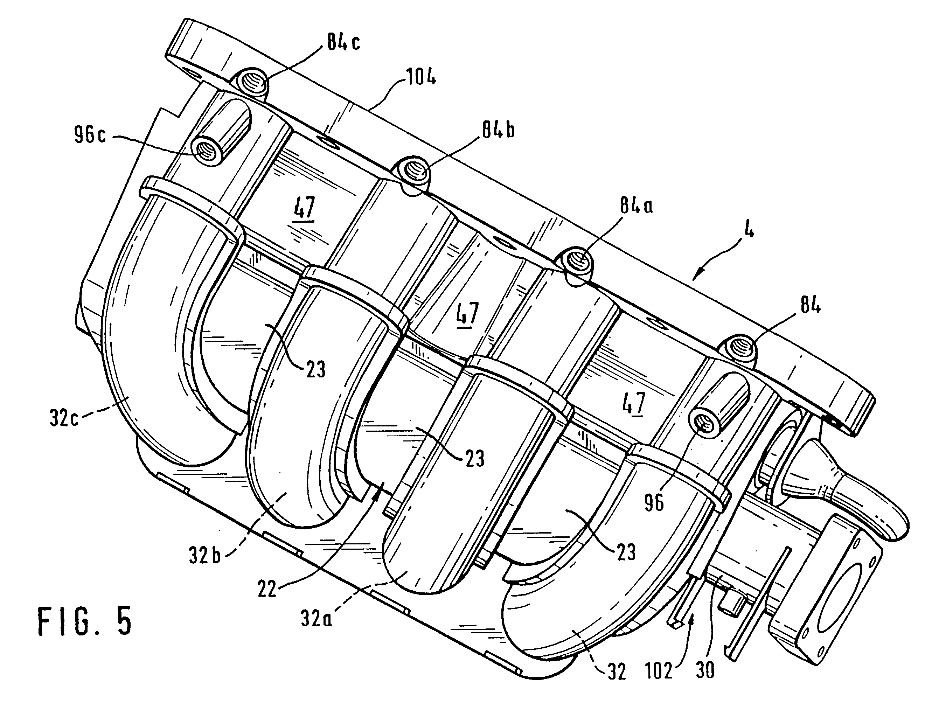

Die **Figur 5** zeigt einen weiteren Blick auf das erste Luftführungsteil 4 aus einer anderen Blickrichtung.

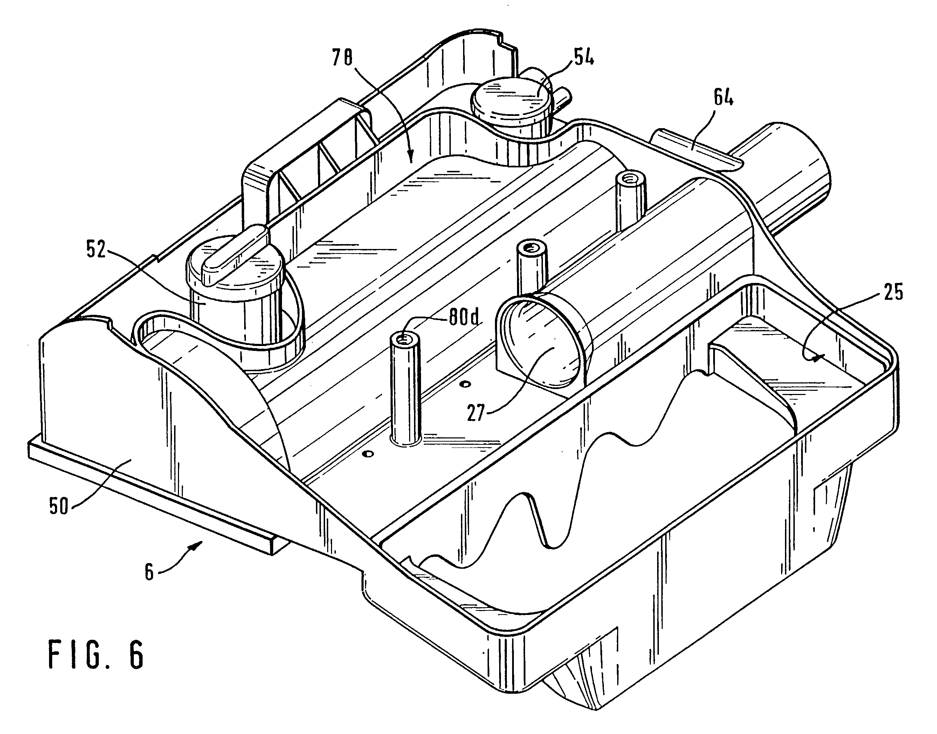

Die **Figur 6** zeigt im wesentlichen das zweite Luftführungsteil 6 aus einer Blickrichtung von schräg oben.

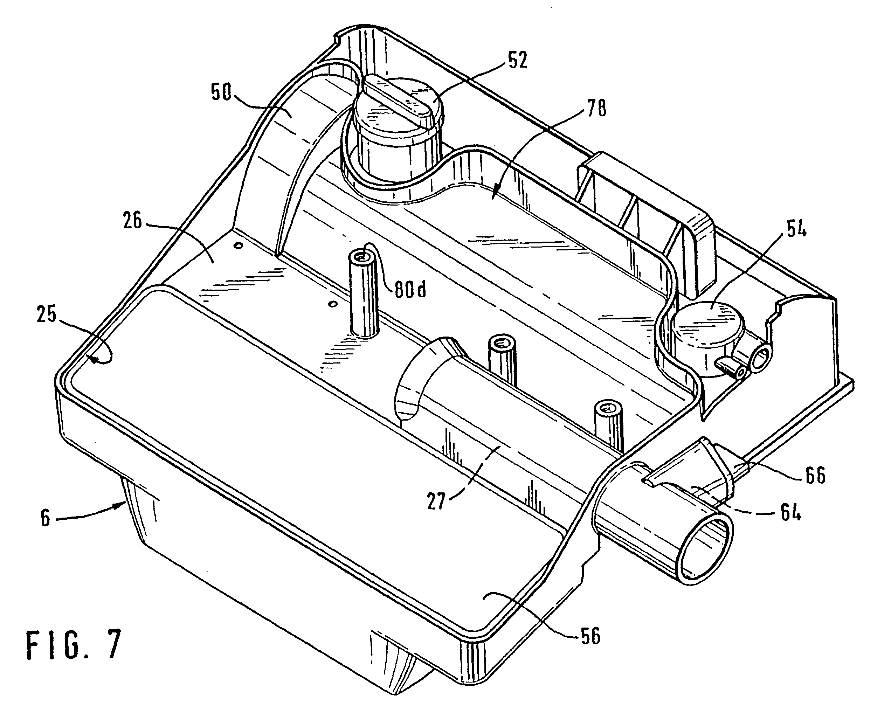

Die **Figur 7** zeigt nochmals eine Ansicht des zweiten Luftführungsteils 6 aus einer gegenüber der Figur 6 geänderten Blickrichtung.

In der nachfolgenden Beschreibung ist in Klammern mehrfach diejenige Figur (Fig.) angegeben, die die jeweilige Einzelheit besonders deutlich zeigt.

Die ausgewählte Brennkraftmaschine ist vierzylindrig und hat einen Zylinderkopf 12. Von der Brennkraftmaschine ist ein kleiner Bereich eines Schnitts durch den Zylinderkopf 12 dargestellt (Fig. 1). Von dem Schnitt durch den Zylinderkopf 12 sind der besseren Übersichtlichkeit wegen im wesentlichen nur die Umrisse dargestellt.

Der Zylinderkopf 12 gehört zu einer Brennkraftmaschine mit mindestens einem Zylinder. In dem Zylinder gibt es einen verschiebbar gelagerten Kolben (der besseren Übersichtlichkeit wegen nicht dargestellt) und einen Brennraum (der besseren Übersichtlichkeit wegen ebenfalls nicht dargestellt). In den Brennraum der Brennkraftmaschine führt eine Gaseinlaßöffnung 14 hinein. Durch die Gaseinlaßöffnung 14 kann Luft oder ein Kraftstoff-Luft-Gemisch in den Brennraum gelangen.

Die Luftführungsanlage 2 hat eine Lufteinlaßöffnung 16 (Fig. 1, 2) und eine Auslaßöffnung 18 (Fig. 1). Durch die Luftführungsanlage 2 führt ein Gasführungsrohr. Das Gasführungsrohr wird nachfolgend als Gasführungsraum 20 bezeichnet. Der Gasführungsraum 20 beginnt an der Lufteinlaßöffnung 16 und führt über die Auslaßöffnung 18 in die Gaseinlaßöffnung 14 des Zylinderkopfs 12 der Brennkraftmaschine.

Durch den Gasführungsraum 20 kann Luft durch die Lufteinlaßöffnung 16 einströmen und in den Brennraum der Brennkraftmaschine gelangen. Im Verlauf der Luftführungsanlage 2 kann der durchströmenden Luft Kraftstoff oder ein Gemisch zugeführt werden, je nach Art der Brennkraftmaschine und je nach Bedarf.

Zur Vereinfachung der Erläuterungen der Ausführungsbeispiele wird nachfolgend der Gasführungsraum 20 gedanklich in mehrere Teile unterteilt. Nach dieser gedanklichen Unterteilung umfaßt der Gasführungsraum 20, beginnend bei der Lufteinlaßöffnung 16, einen Einlaßkanal 21 (erster Teil 21 des Gasführungsraums 20) (Fig. 2). Dem Einlaßkanal 21 schließt sich stromabwärts ein Rohluftraum bzw. Luftraum 22 an (zweiter Teil 22 des Gasführungsraums 20) (Fig. 1, 2). In Strömungsrichtung betrachtet, teilt sich der Luftraum 22 in drei Rohluftkanäle 23 (dritter Teil 23 des Gasführungsraums 20) (Fig. 2). In einem Vorfilterraum 24 (vierter Teil 24 des Gasführungsraums 20) kommen die Rohluftkanäle 23 wieder zusammen. Der Vorfilterraum 24 befindet sich vor einem Filtereinbauraum 25 (fünfter Teil 25 des Gasführungsraums 20). Im Anschluß an den Filtereinbauraum 25 kommt ein Nachfilterraum 26 (sechster Teil 26 des Gasführungsraums 20) (Fig. 1, 2). Im Anschluß an den Nachfilterraum 26 kommt in Strömungsrichtung betrachtet ein Beruhigungskanal 27 (siebter Teil 27 des Gasführungsraums 20) (Fig. 1, 2, 6). Dem Beruhigungskanal 27 folgt ein Verbindungskanal 28 (achter Teil 28 des Gasführungsraums 20) (Fig. 2). Der Verbindungskanal 28 befindet sich im wesentlichen innerhalb des flexiblen Rohrs 8. Der Verbindungskanal 28 endet stromabwärts in einem Drosselorgan 29 (neunter Teil 29 des Gasführungsraums 20) (Fig. 2, 3). Dann folgt stromabwärts ein Verbindungsstutzen 30 (zehnter Teil 30 des Gasführungsraums 20) (Fig. 2). Der Verbindungsstutzen 30 mündet in einen Gasverteilungsraum 31 (elfter Teil 31 des Gasführungsraums 20) (Fig. 1, 2). Aus dem Gasverteilungsraum 31 zweigt ein Kanal 32 (zwölfter Teil 32 des Gasführungsraums 20) ab (Fig. 1, 2, 3). Der Kanal 32 führt das durch die Luftführungsanlage 2 strömende Medium bzw. ein Teil dieses Mediums aus dem Gasverteilungsraum 31 durch die Auslaßöffnung 18, durch die Gaseinlaßöffnung 14 in den Brennraum der Brennkraftmaschine.

Weil die bevorzugt ausgewählte Luftführungsanlage 2 beispielhaft für eine Brennkraftmaschine mit vier Brennräumen vorgesehen ist, zweigen parallel zu dem Kanal 32 drei weitere Kanäle 32a, 32b, 32c (Fig. 2, 5) aus dem Gasverteilungsraum 31 ab, wobei jedes der Kanäle 32, 32a, 32b, 32c zu je einem Brennraum der vierzylindrigen Brennkraftmaschine führt.

Der Einlaßkanal 21, der Luftraum 22, der Rohluftkanal 23 und teilweise der Vorfilterraum 24 gehören zu einem Rohrbereich der Luftführungsanlage 2, der nachfolgend die Bezeichnung durchgeführter Bereich 38 erhält. Die Luftführungsanlage 2 kann auch so ausgeführt werden, daß sich ein Teil dieser Bestandteile außerhalb des durchgeführten Bereichs 38 befindet.

Die Kanäle 32, 32a, 32b, 32c zweigen, in Längsrichtung des Gasverteilungsraums 31 betrachtet, fast senkrecht aus dem Gasverteilungsraum 31 ab. Die Kanäle 32, 32a, 32b, 32c bilden einen schneckenförmig geformten Bogenbereich 40 (Fig. 1) der Luftführungsanlage 2. Grob betrachtet kann der Bogenbereich 40 gedanklich in einen ersten Teilbereich 41, einen zweiten Teilbereich 42 und in einen dritten Teilbereich 43 aufgeteilt werden.

Der erste Teilbereich 41 beginnt, in Strömungsrichtung betrachtet, an der Abzweigung der Kanäle 32, 32a, 32b, 32c aus dem Gasverteilungsraum 31. Im ersten Teilbereich 41 sind die Kanäle 32, 32a, 32b, 32c über eine Wand 46 miteinander verbunden (Fig. 2). Auf der nach außen gewandten Seite der Wand 46 befindet sich der erste Teilbereich 41 der Kanäle 32, 32a, 32b, 32c (Fig. 2), und auf der nach innen gewandten Seite der Wand 46 befindet sich der Luftraum 22. Die Wand 46 trennt den Luftraum 22 gegen die Umgebung ab, und die Wand 46 dient auch dazu, um die Kanäle 32, 32a, 32b, 32c gegenüber dem Luftraum 22 abzutrennen. Im ersten Teilbereich 41 verlaufen die Kanäle 32, 32a, 32b, 32c in einem Bogen (Rechtsbogen um etwa 90° bei Blickrichtung gemäß Fig. 1). Nach dem Bogen folgt ein kurzes gerades Stück. Das Ende des ersten Teilbereichs 41 wird gedanklich an das Ende des geraden Stücks gelegt.

Der zweite Teilbereich 42 des Bogenbereichs 40 schließt sich dem ersten Teilbereich 41 an. Im zweiten Teilbereich 42 sind die Kanäle 32, 32a, 32b, 32c in einem weiteren Bogen (Rechtsbogen um beispielsweise etwa 120° bei Blickrichtung gemäß Fig. 1) geführt. Im zweiten Teilbereich 42 sind die Kanäle 32, 32a, 32b, 32c zueinander beabstandet, so daß zwischen den Kanälen 32, 32a, 32b, 32c Lücken entstehen, die dem Rohluftkanal 23 zum Verbinden des Luftraums 22 mit dem Vorfilterraum 24 dienen (Fig. 2, 5). Zwischen den beabstandeten Kanälen 32, 32a, 32b, 32c hindurch kann die Luft aus dem Luftraum 22 in Richtung des Vorfilterraums 24 strömen.

Bei dem in der Zeichnung dargestellten Ausführungsbeispiel gibt es zwischen den Kanälen 32, 32a, 32b, 32c drei Lücken. Durch diese drei Lücken führt der Rohluftkanal 23 (Fig. 2) aus dem Luftraum 22 in den Vorfilterraum 24. Weil die beispielhaft ausgewählte Brennkraftmaschine vier Zylinder hat, ergeben sich zwischen den Kanälen 32, 32a, 32b, 32c die drei Lücken, weshalb der Rohluftkanal 23 in drei die Luft parallel führende Bereiche aufgeteilt ist. Der Rohluftkanal 23 nützt die Lücken zwischen den Kanälen 32, 32a, 32b, 32c optimal aus, so daß zwischen den Kanälen 32, 32a, 32b, 32c kein nicht nutzbarer Raum verschwendet wird.

Im Anschluß an den zweiten Teilbereich 42 kommt der dritte Teilbereich 43 (Fig. 1). Im dritten Teilbereich 43 sind die Kanäle 32, 32a, 32b, 32c dann im wesentlichen gerade, bis die Kanäle 32, 32a, 32b, 32c an je einer Auslaßöffnung 18 enden. Eine im dritten Teilbereich 43 zwischen die Kanäle 32, 32a, 32b, 32c eingefügte Wand 47 (Fig. 5) trennt den Luftraum 22 gegen die Umgebung ab.

Die Kanäle 32, 32a, 32b, 32c sind schneckenförmig gebogen. Die Kanäle 32, 32a, 32b, 32c sind in den drei Teilbereichen 41, 42, 43 beispielsweise um insgesamt 180° gebogen. Wie die Figur 1 zeigt, können die Kanäle 32, 32a, 32b, 32c insbesondere auch um mehr als 180° gebogen sein. Der sogenannte schneckenförmig geformte Bogenbereich 40 umschließt mindestens teilweise den durchgeführten Bereich 38.

Die Kanäle 32, 32a, 32b, 32c haben einen Querschnitt, der von der Form her in etwa dem eines stark verkleinerten Querschnitts eines Straßentunnels entspricht (Fig. 2).

Am Zylinderkopf 12 der Brennkraftmaschine gibt es einen Raum 48 (Fig. 1). In dem Raum 48 befinden sich beispielsweise die bei einer Brennkraftmaschine üblichen Einlaßventile, Auslaßventile und die Steuerwelle zum Steuern der Einlaß- und Auslaßventile. Die Steuerwelle, die Einlaß- und Auslaßventile sind der besseren Übersichtlichkeit wegen nicht dargestellt. Der Raum 48 (Fig. 1) ist mit Hilfe einer Zylinderkopfhaube 50 (Fig. 1, 6) abgedeckt. An die Zylinderkopfhaube 50 sind ein Öleinfüllstutzen 52 und ein Anschluß 54 angeformt. An dem Anschluß 54 können in den Raum 48 bzw. aus dem Raum 48 führende Leitungen angeschlossen werden.

Die Zylinderkopfhaube 50 ist so geformt, daß sie sowohl zum Abdecken des Raums 48 des Zylinderkopfs 12, als auch zum Bilden des zweiten Luftführungsteils 6 der Luftführungsanlage 2 dienen kann (Fig. 6). Mit anderen Worten, das zweite Luftführungsteil 6 ist so geformt, daß es sowohl ein Bestandteil der Luftführungsanlage 2 ist, als auch zum Abdecken des Raums 48 der Brennkraftmaschine dienen kann. Das in der Figur 6 abgebildete zweite Luftführungsteil 6 mit der angeformten Zylinderkopfhaube 50 kann einstückig zusammenhängend aus einer Spritzgießform gewonnen werden. Das Material des zweiten Luftführungsteils 6 ist vorzugsweise Kunststoff.

Das zweite Luftführungsteil 6 ist so geformt, daß darin der Filtereinbauraum 25 (Fig. 6) gebildet wird. Daneben bildet das zweite Luftführungsteil 6 auch den Beruhigungskanal 27 (siebter Teil des Gasführungsraums 20) (Fig. 1, 2, 6). In dem Filtereinbauraum 25 befindet sich ein Luftfilter 56 (Fig. 1, 2, 7). Der Luftfilter 56 besteht im wesentlichen aus einer Filterpatrone, die in den Filtereinbauraum 25 eingelegt ist. An der Filterpatrone des Luftfilters 56 ist eine umlaufende Dichtung 58 (Fig. 1, 2) vorgesehen. Die Dichtung 58 dichtet den Luftfilter 56 gegen das Luftführungsteil 6 bzw. gegen die Designhaube 10 ab (Fig. 1, 2), damit keine Luft unter Umgehung des Luftfilters 56 aus dem Vorfilterraum 24 in den Nachfilterraum 26 gelangen kann.

Wegen dem Luftfilter 56 können die Bereiche stromaufwärts vor dem Luftfilter 56, die den Einlaßkanal 21, den Luftraum 22, den Rohluftkanal 23 und den Vorfilterraum 24 umfassen, als Rohluftraum 60 (Fig. 2) bezeichnet werden. Entsprechend können die Bereiche der Luftführungsanlage 2, die sich stromabwärts hinter dem Luftfilter 56 befinden, als Reinluftraum 62 bezeichnet werden. Der Reinluftraum 62 umfaßt den Nachfilterraum 26, den Beruhigungskanal 27, den Verbindungskanal 28, den inneren Bereich des Drosselorgans 29, den Verbindungsstutzen 30, den Gasverteilungsraum 31 und die Kanäls 32, 32a, 32b, 32c.

An das zweite Luftführungsteil 6 ist eine Anschlußöffnung 64 (Fig. 2, 7) angeformt. Die Anschlußöffnung 64 mündet in den Beruhigungskanal 27. In der Anschlußöffnung 64 ist ein Strömungsmesser 66 (Fig. 7) vorgesehen. Der Strömungsmesser 66 kann das je Zeiteinheit durch den Gasführungsraum 20 strömende Volumen bzw. die je Zeiteinheit durch den Gasführungsraum 20 strömende Masse der Luft sensieren und ein entsprechendes elektrisches Signal an eine nicht dargestellte Elektronik liefern. Neben oder anstatt dem Strömungsmesser 66 kann in der Anschlußöffnung 64 auch ein die Temperatur der durchströmenden Luft messender Temperaturmesser eingebaut sein.

Stromaufwärts vor dem Strömungsmesser 66 sind in dem Beruhigungskanal 27 ein aus Metall bestehendes Sieb 68 (Fig. 2) und/oder ein aus Kunststoff geformtes Strömungsgitter 68a vorgesehen. Das Sieb 68 und das Strömungsgitter 68a begünstigen die Beruhigung der den Strömungsmesser 66 anströmenden Luft.

Das zweite Luftführungsteil 6 der Luftführungsanlage 2, das auch die Funktion der Zylinderkopfhaube 50 übernimmt, ist über ein Befestigungsmittel 70 (Fig. 1) bzw. über mehrere Befestigungsmittel 70 mit dem Zylinderkopf 12 der Brennkraftmaschine verbunden. Das Befestigungsmittel 70 wird beispielsweise in Form einer Schraube bzw. in Form mehrerer Schrauben gebildet, mit denen das Luftführungsteil 6 mit der Brennkraftmaschine fest verbunden wird. Zwischen dem Zylinderkopf 12 und dem Luftführungsteil 6 ist eine umlaufende Zylinderkopfdichtung 72 (Fig. 1) vorgesehen, die den Raum 48 gegen die Umgebung abdichtet.

Das zweite Luftführungsteil 6 ist über ein Befestigungsmittel 74 (Fig. 1) fest, aber bei Bedarf lösbar, mit dem ersten Luftführungsteil 4 verbunden. Das Befestigungsmittel 74 umfaßt beispielsweise eine Klammer oder mehrere über den Umfang verteilte Klammern. Die Klammern des Befestigungsmittels 74 sind beispielsweise am zweiten Luftführungsteil 6 schwenkbar gelagert und können, nach Aufgesetzen des zweiten Luftführungsteils 6 auf dem ersten Luftführungsteil 4, an entsprechenden am ersten Luftführungsteil 4 vorgesehenen Nocken eingerastet werden.

Die Formen des ersten Luftführungsteils 4 und des zweiten Luftführungsteils 6 sind so aufeinander abgestimmt, daß sich zwischen dem ersten Luftführungsteil 4 und dem zweiten Luftführungsteil 6 ein Hohlraum bildet, der Bestandteil des Gasführungsraums 20 ist. In dem Hohlraum befindet sich beispielsweise insbesondere der Vorfilterraum 24 und der Filtereinbauraum 25. Zwischen dem ersten Luftführungsteil 4 und dem zweiten Luftführungsteil 6 ist eine Gehäusedichtung 76 vorgesehen (Fig. 1, 2). Die Gehäusedichtung 76 dichtet den Gasführungsraum 20 gegen die Umgebung ab.

Die Designhaube 10 ist auf das zweite Luftführungsteil 6 aufgesetzt. Die Formen der Designhaube 10 und des zweiten Luftführungsteils 6 sind so aufeinander abgestimmt, daß sich zwischen der Designhaube 10 und dem zweiten Luftführungsteil 6 ein Hohlraum bildet, der Bestandteil des Nachfilterraums 26 ist. Dieser Hohlraum gehört im wesentlichen zum Reinluftraum 62. Der Hohlraum zwischen der Designhaube 10 und dem zweiten Luftführungsteil 6 erstreckt sich nicht nur im Bereich unmittelbar stromabwärts des Filters 56, sondern dieser Hohlraum erstreckt sich auch weit in den Bereich, der sich oberhalb der den Raum 48 abdeckenden Zylinderhaube 50 befindet. Dadurch entsteht zwischen der Designhaube 10 und dem zweiten Luftführungsteil 6 eine zusätzliche Kammer 78 (Fig. 1, 7). Die Kammer 78 befindet sich nicht unmittelbar in der Strömung der Luft, sondern liegt etwas abseits davon. Zwischen der Designhaube 10 und dem Luftführungsteil 6 sind zwecks Verstärkung und zum sicheren Halten des Luftfilters 56 Zwischenstege vorgesehen. In den Zwischenstegen befinden sich Öffnungen, so daß die zusätzliche Kammer 78 direkt mit dem Gasführungsraum 20 in unmittelbarer Verbindung steht. Die zusätzliche Kammer 78 vergrößert volumenmäßig das nutzbare Volumen des Gasführungsraums 20. Dies hat erhebliche Einflüsse auf das Geräuschverhalten der Brennkraftmaschine. Dadurch daß der Gasführungsraum 20 auch bei eingeschränkten äußeren Platzverhältnissen ziemlich groß gemacht werden kann, kann die Geräuschentwicklung der Luftführungsanlage 2 bzw. der Brennkraftmaschine wesentlich reduziert werden.

Die Designhaube 10 ist über ein Befestigungsmittel 80 mit dem zweiten Luftführungsteil 6 fest, aber bei Bedarf lösbar verbunden (Fig. 1). Das Befestigungsmittel 80 umfaßt beispielsweise ein Scharnier 80a oder mehrere Scharniere 80a, eine Schraube 80b oder mehrere Schrauben 80b und eine Klammer 80c oder mehrere Klammern 80c. Entsprechend der Anzahl der Schrauben 80b, umfaßt das Befestigungsmittel 80 auch ein an das Luftführungsteil 6 angeformtes bzw. angeschnittenes Muttergewinde 80d (Fig. 1, 6) oder mehre Muttergewinde 80d zum Einschrauben der Schraube 80b bzw. Schrauben 80b zum Befestigen der Designhaube 10 an dem Luftführungsteil 6. Nach einem Lösen der Klammer 80c und der Schraube 80b kann die Designhaube 10 gegenüber dem Luftführungsteil 6 geschwenkt werden und es kann beispielsweise der Luftfilter 56 kontrolliert bzw. ausgetauscht werden.

An Berührstellen zwischen der Designhaube 10 und dem zweiten Luftführungsteil 6 ist eine umlaufende Dichtung 82 vorgesehen. Die Dichtung 82 ist auch an den Zwischenstegen zwischen dem Luftführungsteil 6 und der Designhaube 10 angebracht.

Die Zyinderkopfdichtung 72, die Gehäusedichtung 76 zwischen den beiden Luftführungsteilen 4 und 6 und die Dichtung 82 dienen zur Abdichtung und zur akustischen Abkopplung zwischen den verschiedenen Bauteilen und wirken damit geräuschreduzierend.

Bei der Luftführungsanlage 2 ist eine Kraftstoffzuführungsöffnung 84 (Fig. 1, 5) vorgesehen. Wie das bevorzugt ausgewählte Ausführungsbeispiel zeigt, führt die Kraftstoffzuführungsöffnung 84 im Bereich der Auslaßöffnung 18 in den Gasführungsraum 20. Entsprechend der Anzahl der Kanäle 32, 32a, 32b, 32c ist eine entsprechende Anzahl Kraftstoffzuführungsöffnungen 84, 84a, 84b, 84c (Fig. 5) vorgesehen.

An die Luftführungsanlage 2 ist eine Kraftstoffverteilerleiste 86 (Fig. 1) anmontiert. Die Kraftstoffverteilerleiste 86 umfaßt ein Kraftstoffrohr 88, ein elektromagnetisch betätigbares Einspritzventil 90 (Fig. 1) und einen Kraftstoffanschlußstutzen 92. In jedes der Kraftstoffzuführungsöffnungen 84, 84a, 84b, 84c (Fig. 5) ist je ein Einspritzventil 90 (Fig. 1) eingesetzt. Jedes dieser vier Einspritzventile 90 zweigt von dem Kraftstoffrohr 88 ab. Von den Einspritzventilen 90 ist der Übersichtlichkeit wegen nur eines in der Figur 1 gezeigt. Über eine nicht dargestellte Kraftstoffpumpe gelangt der Kraftstoff über den Kraftstoffanschlußstutzen 92 in das Kraftstoffrohr 88. Über das Kraftstoffrohr 88 werden die beispielsweise vier Einspritzventile 90 mit Kraftstoff versorgt, wobei die Einspritzventile 90 den Kraftstoff, gesteuert von einer Steuereinrichtung, dosiert über die Gaseinlaßöffnung 14 in den Brennraum der Brennkraftmaschine einspritzen. Im Bereich der Gaseinlaßöffnung 14 erfolgt eine intensive Vermischung des Kraftstoffs mit der über die Luftführungsanlage 2 der Brennkraftmaschine zugeführten Luft.

Zwischen dem ersten Luftführungsteil 4 und dem zweiten Luftführungsteil 6 wird ein sich entlang der beispielsweise vier Zylinder der Brennkraftmaschine erstreckender Hohlraum 94 gebildet. In diesem Hohlraum 94 kann die Kraftstoffverteilerleiste 86 mit den Einspritzventilen 90 angeordnet werden. Dadurch ist die Kraftstoffverteilerleiste 86 vor Beschädigungen geschützt und, weil von oben nicht sichtbar, ergibt sich ein weitgehend glattflächiges und deshalb optisch ansprechendes Aussehen der Luftführungsanlage 2. Weil die Befestigungsmittel 70 und 74 so gestaltet sind, daß das Luftführungsteil 6 mit der Designhaube 10 leicht abgenommen werden kann, ist bei Bedarf die Kraftstoffverteilerleiste 86 leicht zugänglich.

Am ersten Luftführungsteil 4 gibt es zwei Befestigungsgewinde 96 und 96c (Fig. 5). Die Befestigungsgewinde 96, 96c sind vorgesehen, damit die Kraftstoffverteilerleiste 86 mit den Einspritzventilen 90 über Befestigungsschrauben fest aber lösbar mit dem Luftführungsteil 4 verbunden werden kann. Die Befestigungsschrauben sind der besseren Übersichtlichkeit wegen nicht dargestellt.

In der Figur 1 ist eine mehrfach abgewinkelte, strichpunktiert dargestellte Linie 98 eingezeichnet. Die strichpunktierte Linie 98 einerseits und der Zylinderkopf 12 der Brennkraftmaschine andererseits begrenzen einen Einbauraum 100. Die Luftführungsanlage 2 befindet sich innerhalb des Einbauraums 100. Bei vielen Kraftfahrzeugen ist der Raum, der für die Luftführungsanlage 2 zur Verfügung gestellt werden kann bzw. zur Verfügung gestellt wird, relativ eng begrenzt. Wie die Zeichnung zeigt, nützt die erfindungsgemäß ausgeführte Luftführungsanlage 2 den zur Verfügung gestellten Einbauraum 100 sehr gut aus. Die Luftführungsanlage 2 ist so gestaltet, daß trotz des relativ kleinen Einbauraums 100 das innere nutzbare Volumen des Gasführungsraums 20 der Luftführungsanlage 2 relativ groß ist. Durch das große Volumen des Gasführungsraums 20 ergeben sich positive Effekte auf die Geräuschreduzierung und auf den Füllungsgrad der Brennräume der Brennkraftmaschine. Weil das nutzbare Volumen des Gasführungsraums 20 relativ groß gestaltet werden kann, steht auch relativ viel Platz für den Luftfilter 56 zur Verfügung, so daß eine relativ große Luftfilterpatrone in die Luftführungsanlage 2 eingebaut werden kann, was den Vorteil hat, daß die mögliche Benutzungsdauer des Luftfilters 56 lang ist, bevor die Luftfilterpatrone des Luftfilters 56 ausgetauscht werden muß. Auch weil die Luftführungsanlage 2 den schneckenförmig geformten Bogenbereich 40 und den mindestens teilweise innerhalb des schneckenförmig geformten Bogenbereichs 40 durchgeführten, im wesentlichen den Luftraum 22 und den Rohluftkanal 23 umfassenden durchgeführten Bereich 38 hat, ergibt sich die besonders gute Ausnützung des zur Verfügung stehenden Einbauraums 100.

Das Rohr 8 ist mit seinem stromaufwärtigen Ende an dem an das Luftführungsteil 6 angeformten Beruhigungskanal 27 angeschlossen (Fig. 2), und stromabwärts ist das Rohr 8 an das Drosselorgan 29 angeschlossen. Das Drosselorgan 29 ist mechanisch an das erste Luftführungsteil 4 angekoppelt. Über die elastische Gehäusedichtung 76 sind die beiden Luftführungsteile 4 und 6 schwingungsmäßig und akustisch weitgehend entkoppelt. Das Rohr 8 ist elastisch und behindert deshalb die schwingungsmäßige Entkopplung zwischen den beiden Luftführungsteilen 4 und 6 nicht bzw. unwesentlich. Das Drosselorgan 29 umfaßt beispielsweise eine in einem Drosselklappenstutzen 29a schwenkbar gelagerte Drosselklappe 29b (Fig. 2). Die Stellung der Drosselklappe 29b ist beispielsweise mit Hilfe eines elektrisch steuerbaren Stellantriebs 29c (Fig. 3) veränderbar. Das den Drosselklappenstutzen 29a, die Drosselklappe 29b und den Stellantrieb 29c umfassende Drosselorgan 29 ist als komplette Einheit an das erste Luftführungsteil 4 der Luftführungsanlage 2 anflanschbar. Der Stellantrieb 29c des Drosselorgans 29 umfaßt beispielsweise einen elektrisch ansteuerbaren Elektromotor und/oder einen beispielsweise über einen Bowdenzug von einem Gaspedal aus mechanisch verstellbaren Betätigungshebel.

An der bevorzugt beispielhaft gezeigten Luftführungsanlage 2 ist eine Haltevorrichtung 102 (Fig. 3, 5) vorgesehen. Über die Haltevorrichtung 102 kann beispielsweise ein Tankentlüftungsventil an der Luftführungsanlage 2 befestigt werden. Die Haltevorrichtung 102 ist beispielsweise an den Verbindungsstutzen 30 des ersten Luftführungsteils 4 angeformt.

Zusammengebaut bildet die Luftführungsanlage 2 eine Funktionseinheit für eine Brennkraftmaschine und kann deshalb auch als Luftführungsmodul bezeichnet werden. Die Brennkraftmaschine ist häufig eine mit Unterdruck Luft ansaugende Maschine. Deshalb kann die Luftführungsanlage 2 auch als Luftführungsmodul bzw. Sauganlage bzw. als Saugmodul bezeichnet werden.

Die Luftführungsanlage 2 bzw. das Luftführungsmodul bzw. die Sauganlage bzw. das Saugmodul kann beispielsweise an einer ersten Fertigungsstätte komplett zusammengebaut werden, um dann an einer zweiten Fertigungsstätte an die Brennkraftmaschine angebaut zu werden. Es ist aber auch möglich, die Luftführungsanlage 2 in zwei Einzelmodule getrennt an die zweite Fertigungsstätte zu liefern und erst beim Anbauen an die Brennkraftmaschine zusammenzusetzen. Das erste Einzelmodul (Fig. 4) umfaßt beispielsweise im wesentlichen das erste Luftführungsteil 4, das Rohr 8, das Drosselorgan 29 und die am ersten Luftführungsteil 4 angebaute Kraftstoffverteilerleiste 86 mit den Einspritzventilen 90. Die Figur 4 zeigt die Komponenten des ersten Einzelmoduls. An dem ersten Luftführungsteil 4 ist eine Flanschfläche 104 (Fig. 1, 5) vorgesehen. An der Brennkraftmaschine gibt es eine Gegenflanschfläche. Das erste Luftführungsteil 4 kann mit der Flanschfläche 104 an der Gegenflanschfläche der Brennkraftmaschine befestigt werden. Zum Befestigen dienen in der Zeichnung nicht dargestellte Befestigungsmittel, insbesondere Schrauben. Das zweite Einzelmodul umfaßt beispielsweise im wesentlichen das zweite Luftführungsteil 6 mit der angeformten Zylinderkopfhaube 50, den in das Luftführungsteil 6 eingesetzten Luftfilter 56, den Strömungsmesser 66, den Öleinfüllstutzen 52 und die Designhaube 10. Die Designhaube 10 kann aber auch unabhängig vom zweiten Einzelmodul später an die Brennkraftmaschine angebaut werden.

Beim dargestellten Ausführungsbeispiel sind die vier Einspritzventile 90 vorgesehen, um jedem Zylinder der Brennkraftmaschine separat Kraftstoff zuzumessen. Es sei darauf hingewiesen, daß die Luftführungsanlage 2 auch so ausgeführt sein kann, daß an einer anderen Stelle der Luftführungsanlage 2 Kraftstoff zugeführt wird. Es ist beispielsweise möglich, im Bereich des Drosselorgans 29 Kraftstoff in den Gasführungsraum 20 einzuspritzen, wobei im Bereich des Drosselorgans 29 der Kraftstoff mit der Luft intensiv vermischt und zusammen mit der Luft den Brennräumen der Brennkraftmaschine zugeführt wird. Daneben gibt es auch die Möglichkeit, den Kraftstoff über nicht dargestellte Einspritzventile nicht in die Luftführungsanlage 2 sondern direkt in die Brennräume der Brennkraftmaschine einzuspritzen.

Beim ersten Luftführungsteil 4 gibt es eine geschwungen verlaufende erste Teilungsebene 106 und eine geschwungen verlaufende zweite Teilungsebene 108 (Fig. 1). Zur leichten gießtechnischen Herstellung des Luftführungsteils 4 ist das Luftführungsteil 4 aus drei gegossenen bzw. gespritzten Einzelteilen hergestellt, die nach dem Gießen bzw. Spritzen zusammengeschweißt oder zusammengeklebt werden. Weil das erste Luftführungsteil 4, ebenso wie das zweite Luftführungsteil 6, vorzugsweise aus Kunststoff besteht, ist das Zusammenschweißen bzw. Zusammenkleben der drei Einzelteile leicht möglich.

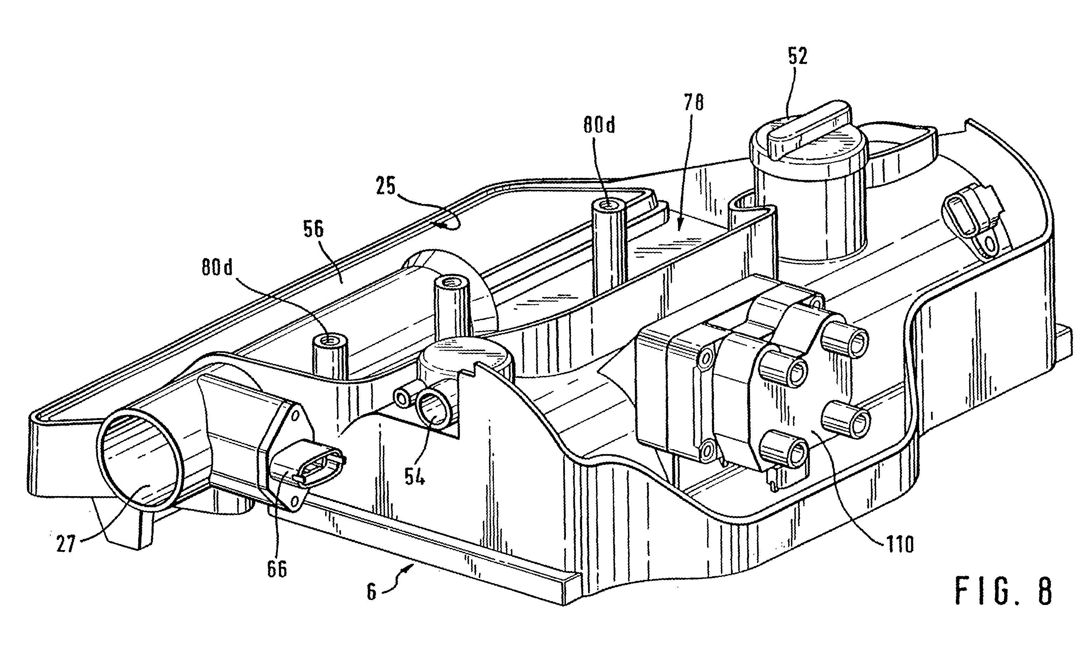

Die **Figur 8** zeigt ein abgewandeltes, bevorzugt ausgewähltes Ausführungsbeispiel.

Entsprechend der Figur 6 zeigt die Figur 8 einen Blick auf das zweite Luftführungsteil 6 aus einer anderen Blickrichtung. Zusätzlich ist bei dem in der Figur 8 dargestellten Ausführungsbeispiel an dem Luftführungsteil 6 eine Zündeinrichtung 110 fest angebracht. Die Zündeinrichtung 110 umfaßt beispielsweise vier Zündspulen, wobei an jeder der vier Zündspulen je eine nicht dargestellte Zündkerze angeschließbar ist. Die Zündeinrichtung 110 ist vorzugsweise von einer Bauart, bei der auf einen Zündverteiler verzichtet werden kann. Die Zündeinrichtung 110 dient zum Zünden des Kraftstoff-Luft-Gemisches in den Brennräumen der Brennkraftmaschine.

## Patentansprüche

1. Luftführungsanlage, für eine Brennkraftmaschine mit mindestens einem Brennraum mit mindestens einer in den Brennraum führenden Gaseinlaßöffnung, mit einer Lufteinlaßöffnung (16), mit einer an die Gaseinlaßoffnung des Brennraums angeschlossenen Auslaßöffnung (18) und mit einem Luft von der Lufteinlaßöffnung (16) zu der Auslaßöffnung (18) führenden Gasführungsraum (20), wobei der Gasführungsraum (20) einen schneckenförmig geformten Bogenbereich (40) und einen mindestens teilweise innerhalb des schneckenförmig geformten Bogenbereichs (40) durchgeführten Bereich (38) hat, **dadurch gekennzeichnet, daß** zwischen der Lufteinlaßöffnung (16) und der Auslaßöffnung (18) ein Luftfilter (56) vorgesehen ist, wobei die Luftführungsanlage und der Luftfilter (56) ein gemeinsames Gehäuse mit einer Haube (10) haben.

2. Luftführungsanlage nach Anspruch 1, **dadurch gekennzeichnet, daß** sich der schneckenförmig geformte Bogenbereich (40) stromabwärts von dem durchgeführten Bereich (38) befindet.

3. Luftfuhrungsanlage nach Anspruch 1 oder 2, **dadurch gekennzeichnet, daß** der schneckenförmig geformte Bogenbereich (40) stromaufwärts an die Auslaßöffnung (18) anschließt.

4. Luftführungsanlage nach einem der vorhergehenden Ansprüche, **dadurch gekennzeichnet, daß** der durchgeführte Bereich (38) stromabwärts an die Lufteinlaßöffnung (16) anschließt.

5. Luftführungsanlage nach einem der vorhergehenden Ansprüche, **dadurch gekennzeichnet, daß** der Luftfilter (56) zwischen dem durchgeführten Bereich (38) und dem schneckenförmig geformten Bogenbereich (40) vorgesehen ist.

6. Luftfuhrungsanlage nach einem der vorhergehenden Ansprüche, **dadurch gekennzeichnet, daß** zwischen der Lufteinlaßöffnung (16) und der Auslaßöffnung (18) ein Drosselorgan (29) vorgesehen ist.

7. Luftführungsanlage nach Anspruch 6, **dadurch gekennzeichnet, daß** das Drosselorgan (29) zwischen dem durchgeführten Bereich (38) und dem schneckenförmig geformten Bogenbereich (40) vorgesehen ist.

8. Luftführungsanlage nach Anspruch 6, **dadurch gekennzeichnet, daß** das Drosselorgan (29) stromabwärts von dem Luftfilter (56) vorgesehen ist.

9. Luftführungsanlage nach einem der vorhergehenden Ansprüche, **dadurch gekennzeichnet, daß** ein Zwischenrohr (8) den durchgeführten Bereich (38) mit dem schneckenförmig geformten Bogenbereich (40) verbindet.

10. Luftführungsanlage nach einem der vorhergehenden Ansprüche, **dadurch gekennzeichnet, daß** der Gasführungsraum (20) im schneckenförmig geformten Bogenbereich (40) in mindestens zwei Kanäle (32, 32a, 32b, 32c) aufgeteilt ist, wobei der durchgeführte Bereich (38) mindestens teilweise zwischen den mindestens zwei Kanälen (32, 32a, 32b, 32c) hindurchführt.

11. Luftführungsanlage nach einem der vorhergehenden Ansprüche, **dadurch gekennzeichnet, daß** die Brennkraftmaschine einen mit Hilfe einer Zylinderkopfhaube (50) abgeschlossenen Raum (48) hat und die Zylinderkopfhaube (50) mindestens teilweise mindestens einen Teilbereich des Gasführungsraums (20) bildet.

12. Luftführungsanlage nach Anspruch 11, **dadurch gekennzeichnet, daß** der Luftfilter (56) von der Zylinderkopfhaube (50) getragen wird.

13. Luftführungsanlage nach Anspruch 11 oder 12, **dadurch gekennzeichnet, daß** die Zylinderkopfhaube (50) zum Tragen einer Zündeinrichtung (110) vorgesehen ist.

14. Luftführungsanlage nach einem der vorhergehenden Ansprüche, **dadurch gekennzeichnet, daß** die Haube (10) die Brennkraftmaschine mindestens teilweise abdeckt und mindestens teilweise mindestens einen Teilbereich des Gasführungsraums (20) umschließt.

## Claims

1. Air routing system for an internal combustion engine having at least one combustion space with at least one gas inlet orifice leading into the combustion space, with an air inlet orifice (16), with an outlet orifice (18) connected to the gas inlet orifice of the combustion space and with a gas routing space (20) leading air from the air inlet orifice (16) to the outlet orifice (18), the gas routing space (20) having a helically shaped arcuate region (40) and a region (38) led through at least partially within the helically shaped arcuate region (40), **characterized in that** an air filter (56) is provided between the air inlet orifice (16) and the outlet orifice (18), the air routing system and the air filter (56) having a common housing with a cover (10).

2. Air routing system according to Claim 1, **characterized in that** the helically shaped arcuate region (40) is located downstream of the led-through region (38).

3. Air routing system according to Claim 1 or 2, **characterized in that** the helically shaped arcuate region (40) adjoins the outlet orifice (18) upstream.

4. Air routing system according to one of the preceding claims, **characterized in that** the led-through region (38) adjoins the air inlet orifice (16) downstream.

5. Air routing system according to one of the preceding claims, **characterized in that** the air filter (56) is provided between the led-through region (38) and the helically shaped arcuate region (40).

6. Air routing system according to one of the preceding claims, **characterized in that** a throttle member (29) is provided between the air inlet orifice (16) and the outlet orifice (18).

7. Air routing system according to Claim 6, **characterized in that** the throttle member (29) is provided between the led-through region (38) and the helically shaped arcuate region (40).

8. Air routing system according to Claim 6, **characterized in that** the throttle member (29) is provided downstream of the air filter (56).

9. Air routing system according to one of the preceding claims, **characterized in that** an intermediate pipe (8) connects the led-through region (38) to the helically shaped arcuate region (40).

10. Air routing system according to one of the preceding claims, **characterized in that** the gas routing space (20) in the helically shaped arcuate region (40) is divided into at least two ducts (32, 32a, 32b, 32c), the led-through region (38) leading through at least partially between the at least two ducts (32, 32a, 32b, 32c).

11. Air routing system according to one of the preceding claims, **characterized in that** the internal combustion engine has a space (48) closed off with the aid of a cylinder-head cover (50), and the cylinder-head cover (50) forms at least partially at least one part-region of the gas routing space (20).

12. Air routing system according to Claim 11, **characterized in that** the air filter (56) is carried by the cylinder-head cover (50).

13. Air routing system according to Claim 11 or 12, **characterized in that** the cylinder-head cover (50) is provided for carrying an ignition device (110).

14. Air routing system according to one of the preceding claims, **characterized in that** the cover (10) at least partially covers the internal combustion engine and at least partially surrounds at least one part-region of the gas routing space (20).

## Revendications

1. Système d'acheminement d'air, pour un moteur à combustion interne possédant au moins une chambre de combustion, une ouverture d'admission de gaz conduisant à la chambre de combustion, une ouverture d'entrée d'air (16), une ouverture de sortie (18) raccordée à l'ouverture d'admission de gaz de la chambre de combustion et une chambre d'acheminement de gaz (20) conduisant l'air provenant de l'ouverture (16) à l'ouverture de sortie (18), cette chambre (20) présentant une zone courbe (40) en forme d'escargot ainsi qu'une zone traversante (38) réalisée au moins en partie à l'intérieur de la zone courbe (40),
**caractérisé en ce que**
entre l'ouverture d'admission d'air (16) et l'ouverture de sortie (18) il est prévu un filtre à air (56), le système d'acheminement d'air et le filtre à air (56) possédant un boîtier commun avec un couvercle (10).

2. Système d'acheminement d'air selon la revendication 1,
**caractérisé en ce que**
la zone courbe (40) en forme d'escargot se trouve en aval de la zone traversante (38).

3. Système d'acheminement d'air selon la revendication 1 ou 2,
**caractérisé en ce que**
la zone courbe (40) en forme d'escargot se raccorde en amont de l'ouverture de sortie (18).

4. Système d'acheminement d'air selon l'une quelconque des revendications précédentes,
**caractérisé en ce que**
la zone traversante (38) se raccorde en aval de l'ouverture d'entrée d'air (16).

5. Système d'acheminement d'air selon l'une quelconque des revendications précédentes,
**caractérisé en ce que**
le filtre à air (56) est prévu entre la zone traversante (38) et la zone courbe (40) en forme d'escargot.

6. Système d'acheminement d'air selon l'une des revendications précédentes,
**caractérisé en ce que**
entre l'ouverture d'entrée d'air (16) et l'ouverture de sortie (18), il est prévu un organe d'étranglement (29).

7. Système d'acheminement d'air selon la revendication 6,
**caractérisé en ce que**
l'organe d'étranglement (29), est prévu entre la zone traversante (38) et la zone courbe (40) en forme d'escargot.

8. Système d'acheminement d'air selon la revendication 6,
**caractérisé en ce que**
l'organe d'étranglement (29) est prévu en aval du filtre à air (56).

9. Système d'acheminement d'air selon l'une quelconque des revendications précédentes,
**caractérisé en ce que**
un tube intermédiaire (8) relie la zone traversante (38) à la zone courbe (40) en forme d'escargot.

10. Système d'acheminement d'air selon l'une quelconque des revendications précédentes,
**caractérisé en ce que**
la chambre d'acheminement de gaz (20) est divisée en au moins deux canaux (32, 32a, 32b, 32c) dans la zone courbe (40) en forme d'escargot, la zone traversante (38) passant au moins en partie entre les au moins deux canaux (32, 32a, 32b, 32c).

11. Système d'acheminement d'air selon l'une quelconque des revendications précédentes,
**caractérisé en ce que**
le moteur à combustion interne possède un volume clos (48) fermé à l'aide d'un capot de culasse (50) et au moins une partie de ce capot (50) constitue au moins une partie de la chambre d'acheminement de gaz (20).

12. Système d'acheminement d'air selon la revendication 11,
**caractérisé en ce que**
le filtre à air (56) est porté par le capot de culasse (50).

13. Système d'acheminement d'air selon l'une des revendications 11 ou 12,
**caractérisé en ce que**
le capot de culasse (50) est prévu pour porter un dispositif d'allumage (110).

14. Système d'acheminement d'air selon l'une quelconque des revendications précédentes,
**caractérisé en ce qu'**
au moins en partie le couvercle (10) recouvre le moteur et entoure au moins une partie de la chambre d'acheminement des gaz (20).
